# EUROPEAN PATENT SPECIFICATION

(11) **EP 3 730 553 B1**
(45) Date of publication and mention of the grant of the patent: **22.02.2023**
(21) Application number: 19171381.7
(22) Date of filing: 26.04.2019
(51) Int. Cl.: C08L 91/08

(54) **COMPOSITION COMPRISING AN OXIDIZED POLYETHYLENE WAX, A COLOR MASTERBATCH COMPRISING THE SAME,A PRODUCT COMPRISING THE COLOR MASTERBATCH AND THE USE OF THE COLOR MASTERBATCH**
ZUSAMMENSETZUNG MIT EINEM OXIDIERTEN POLYETHYLENWACHS, FARBMASTERBATCH DAMIT, PRODUKT MIT DEM FARBMASTERBATCH UND VERWENDUNG DES FARBMASTERBATCHES
COMPOSITION COMPRENANT UNE CIRE DE POLYÉTHYLÈNE OXYDÉE, UN MÉLANGE MAÎTRE DE COULEUR LA COMPRENANT, PRODUIT COMPRENANT LE MÉLANGE MAÎTRE DE COULEUR ET UTILISATION DU MÉLANGE MAÎTRE DE COULEUR

(43) Date of publication of application: 28.10.2020
(73) Proprietor: Thai Polyethylene Co., Ltd., 10800 Bangkok (TH)
(72) Inventor: Pattarit, Sahasyodhin, 10260 Bangkok (TH); Paweena, Lertchanyakul, 10500 Bangkok (TH)
(74) Representative: Erbacher, Martin

(56) References cited:
- GB-A- 1 329 334
- JP-A- S5 141 787
- Anonymous: "Mitsui Hi-Wax, product information sheet", Kangshin ASCPI Newsletter, 17 November 2015 (2015-11-17), pages 1-2, XP055614313, Retrieved from the Internet: URL:http://kangshin.com/wp-content/uploads /2015/11/?20?-NewsletterMitsui-Hi-Wax.pdf [retrieved on 2019-08-21]

## Description

The present invention relates to a composition comprising an oxidized polyethylene wax. Furthermore, the invention relates to a color masterbatch and a product comprising the same. Finally, the invention relates to the use of the color masterbatch.

A color masterbatch is a solid or liquid additive for coloring plastics. A masterbatch as referred to herein is a concentrated mixture of pigments and/or additives encapsulates during a heat process into a carrier resin which is then cooled and processed thereafter. Color masterbatches comprise, besides the coloring pigment, normally dispersing agents.

A variety of color masterbatch compositions and dispersing agents for use therein is known in the art.

US 4,544,694 discloses an extrusion lubricant composition. The composition is an extrusion lubricant composition for working surface of an extrusion die for plastic processing, for example polyvinyl chloride, chlorinated vinyl chloride, polyvinylidene chloride or its copolymers.

US 3,278,513 discloses a process for oxidizing linear low molecular weight polyethylene. Specific oxidation process operating conditions are described for manufacturing high quality oxidized wax products.

US 3,293,112 discloses a method for preparing oxidized polyolefin waxes. In detail, preparing oxidized waxes of predetermined acid number and useful to form emulsions is described.

However, products prepared using color masterbatches (and dispersing agents comprised therein) known in the art often suffer from poor mechanical properties.

GB1329334 discloses oxidized polyethylene waxes having specific ranges of molecular weight, acid value and density.

It is therefore the object of the present invention to provide a novel composition for use in color masterbatches overcoming drawbacks of the prior art, in particular suitable to improve the mechanical properties of a product comprising the color masterbatch.

This object is achieved by a composition comprising an oxidized polyethylene wax, wherein the composition has an acid value of 11 to 15 mgKOH/g, preferably 12 to 15 mgKOH/g, even more preferred 12 to 14 mgKOH/g according to ASTM D1386 with respect to the total weight of the oxidized polyethylene wax, a weight average molecular weight from 4,000 to 12,000 g/mol, preferably 4,000 to 9,000 g/mol, even more preferred 5,000 to 8,000 g/mol determined according to gel permeation chromatography; and a density from 0.92 to 0.99 g/cm³, preferably 0.93 to 0.97 g/cm³, even more preferred 0.93 to 0.95 g/cm³ according to ASTM D1505.

It has surprisingly been found by the inventors that the color masterbatch comprising the inventive composition is helpful to improve the mechanical properties of an article comprising the same. The advantageous impact on the mechanical properties was found to be even more pronounced the below preferred embodiments and combinations thereof.

A polyethylene wax as referred to herein is a polyethylene which has a waxy or fatty character. It can be produced with regulators substance by polymerization of ethylene or by depolymerization of polyethylene with higher molecular weight. It is mainly produced by thermal cracking at 400°C but can also be synthesized from natural waxes. By oxidation of the polyethylene wax, an oxidized polyethylene wax is achieved. This may contain a variety of carboxylic acid groups.

The acid value is the mass of potassium hydroxide in mg that is required to neutralize one gram of the oxidized polyethylene wax. The acid number is a measure of the number of carboxylic acid groups in the oxidized polyethylene wax. In a typical procedure, a known amount of samples dissolved in an organic solvent and treated with a solution of potassium hydroxide of known concentration using phenolphthalein as a color indicator is used to determine the acid number.

In a preferred embodiment, the composition has a viscosity from 80 to 1,500 cP at 149°C, preferably 100 to 600 cP at 149°C, even more preferred 130 to 250 cP at 149°C according to ASTM D3236.

Preferably, the composition has a viscosity from 130 to 170 cP at 149°C.

In a further preferred embodiment, the composition has a density from 0.94 to 0.95 g/cm3.

Preferably, the composition comprises 70 to 85% by weight of an oxidized polyethylene wax having an acid value from 17 to 18 mgKOH/g and 15 to 30% by weight of a polyethylene homopolymer wax with respect to the total weight of the composition, respectively.

In another preferred embodiment, the composition has a density from 0.93 to 0.94 g/cm3.

Preferably, the composition has a viscosity from 150 to 250 cP at 149°C.

Further preferred, the polyethylene homopolymer wax has a viscosity from 80 to 1,500 cP at 149°C, preferably 100 to 1,200 cP at 149°C, even more preferred 200 to 1,000 cP at 149°C.

In a further preferred embodiment, the polyethylene homopolymer wax has a density from 0.91 to 0.96 g/cm³, preferably 0.91 to 0.95 g/cm³, even more preferred 0.91 to 0.93 g/cm³.

It may be further preferred that the polyethylene homopolymer way has a weight average molecular weight from 2,000 to 12,000 g/mol, preferably 2,000 to 10,000 g/mol, even more preferred 3,000 to 10,000 g/mol determined according to gel permeation chromatography.

The object is further achieved by a color masterbatch comprising the inventive composition and at least one pigment.

In terms of the present invention a color masterbatch is an additive for coloring a plastic. The color masterbatch according to the invention can be used in application (for coloring) of many types of polymers including polyvinylchloride (PVC), chlorinated polyvinylchloride (CPVC), polyethyleneterephthalate (PET), polybutyleneterephthalate (PBT), acrylonitrile butadiene styrene (ABS), polyamide (PA), polycarbonate (PC), and polyolefin (PO), wherein PVC is most preferred, The color masterbatch comprises at least one pigment. Furthermore, the color masterbatch in accordance with the invention comprises the inventive composition which may be used in this regard as a dispersing agent.

Preferably, the pigment wherein the pigment is selected from the group consisting of organic pigments, inorganic pigments or a combination thereof, preferably is selected from the group consisting of phthalocyanines, ultramarines and mixtures thereof.

The object is further achieved by a product comprising polyvinyl chloride and the inventive color masterbatch.

The inventive product is preferably selected from a pipe, a window profile, a door profile, a siding or a window frame, a door frame, a sheet or a floor.

Finally, the object is achieved by the use of the color masterbatch as referred to herein in extrusion molding or injection molding.

Finally, the object is achieved by the use of the composition as defined herein as a dispersing agent.

"Comprising" as used herein may (but not has to) have the meaning "consisting of".

Methods for determining parameters:
The acid value as referred to herein was determined by titration with KOH according to ASTM D1386.

The viscosity as referred to herein is the Brookfield viscosity determined according to ASTM D3236.

The density as referred to herein was determined using a gradient tube according to ATSM D1505.

The weight average molecular weight as referred to herein is determined using gel permeation chromatography. MW measured by Gel Permeation Chromatography (GPC). Around 24 mg of sample was dissolved in 8 ml of 1,2-dichlorobenzene at 1500°c for 60 min. Then the sample solution, 200 µl, was injected into the high temperature GPC with IR₄ detectors (Polymer Char, Spain) with flow rate of 1 ml/min at 1400°c in column zone and 1500°C in detector zone. The data was processed by GPC One^{®} software, Polymer Char, Spain.

Tensile strength and strain were determined according to ASTM D638. Strength of knit-line can indicate the material can prevent or encourage fusion of PVC.

Torque as referred to herein indicates the influence of the waxes on the ability of PVC to fuse and create torque on extruder. In accordance with the present disclosure, the torque is recorded on the extruder during processing.

Powder flow as referred to herein was observed during process. Poor means fine fluffy pigment that did not flow well in the PVC powder.

Gloss as referred to herein was determined according to ASTM D523 and indicates flow at surface and melt fracture. The gloss is quantified by comparison with a standard which as a gloss of 5 = high gloss.

Pigment streaks were determined using a magnifying glass and streaks counted for 25 in² of surface area. This test indicated the ability of pigments to disperse in PVC.

In the following, the invention will be described in greater detail with reference to specific examples without, however, limiting the scope of the invention necessarily to those specific examples. Rather, one or more of the specific features disclosed with respect to the examples may be used in combination with one or more of the embodiments referred to above to realize the invention.

Four different compositions W-1, W-2, W-3 and W-4 comprising an oxidized polyethylene wax, of which W-1 and W-2 are in accordance with the invention, have been prepared.

| Products | Acid number (mg KOH/g) | Viscosity (cP @ 149 oC) | Density (g/cm3) | MW by GPC |
|---|---|---|---|---|
| W-1 | 12.2 | 159 | 0.938 | 5350 |
| Oxidized wax | | | | |
| W-2 | 12.3 | 165 | 0.935 | 6135 |
| Blending between oxidized wax (17.8 mg KOH/g) and homo PE wax (the ratio is 69: 31) | | | | |
| W-3 | 6.8 | 169 | 0.932 | 5779 |
| Oxidized wax | | | | |
| W-4 | 18.2 | 141 | 0.941 | 5165 |
| Oxidized wax | | | | |

The above compositions W-1, W-2, W-3 and W-4 were used for preparing a variety of masterbatches (examples 5 to 12, of which 7, 8, 11 and 12 are comparative examples). Furthermore, comparative masterbatches were prepared (examples 1 to 4). The masterbatches were tested in PVC.

**Table 1 Processing parameters**

| **No.** | **Wax** | **Pigment** | **Temp Barrel** | **Temp Melt** | **Torque** | **Pressure** | **Powder Flow** |
|---|---|---|---|---|---|---|---|
| 1 | No | No | 375 | 368 | 10368 | 469 | |
| 2 | No | Phth | 375 | 367 | 10200 | 425 | POOR |
| 3 | No | Ultm | 375 | 368 | 8750 | 389 | |
| 4 | Commercial | Phth | 375 | 368 | 10830 | 418 | |
| 5 | W-1 | Phth | 375 | 370 | 10810 | 419 | |
| 6 | W-2 | Phth | 375 | 367 | 9385 | 425 | |
| 7 | W-1 | Ultm | 375 | 368 | 10244 | 396 | |
| 8 | W-2 | Ultm | 375 | 371 | 8565 | 389 | |

**Table 2 PVC product properties**

| **No.** | **Wax** | **Pigment** | **Tensile** | **Strain %** | **Fraction yield 1=yield** | **Pigment Streaks 0=none** | **Gloss 5=high** |
|---|---|---|---|---|---|---|---|
| 1 | No | No | 6090 | 10.3 | 0.8 | 0 | 5 |
| 2 | No | Phth | 6062 | 7.0 | 0 | 0 | 4.5 |
| 3 | No | Ultm | 5954 | 9.0 | 1.0 | 2 | 4.5 |
| 4 | Commercial | Phth | 6285 | 6.8 | 0 | 4 | 3 |
| 5 | W-1 | Phth | 6465 | 8.3 | 1.0 | o | 4.5 |
| 6 | W-2 | Phth | 6276 | 7.5 | 0.8 | 0 | 4.5 |
| 7 | W-3 | Phth | 5984 | 6.1 | 0.2 | 2 | 3 |
| 8 | W-4 | Phth | 6078 | 6.4 | 0 | 2 | 3 |
| 9 | W-1 | Ultm | 6058 | 11.6 | 1.0 | 2 | 4 |
| 10 | W-2 | Ultm | 6084 | 8.7 | 0.8 | 1 | 4 |
| 11 | W-3 | Ultm | 5790 | 7.8 | 0.2 | 2 | 3 |
| 12 | W-4 | Ultm | 4919 | 6.3 | 0.4 | 2 | 3.5 |

### Methotology and formulation of the above examples are shown below.

### 1. Color masterbatch preparation

1. Set Brabender Mixer at 260°F (125°C).
2. Add 36 gram of pigment and 24 gram of W-1, W-2, W-3, W-4 at 5 rpm. When it looks like the wax has melted, turn up to 20 rpm and mix 3 minutes.
3. Cool in the Brabender at o rpm and remove master-batch.
4. The bowl was taken apart and material was chipped and scraped from rotors and bowl,
5. Grind to a powder.

| **Composition** | **gram** |
|---|---|
| Pigment | 36 |
| W-1, W-2, W-3, W-4 | 24 |

### 2. The PVC siding powder formulation (General formulation of PVC siding powder)

| **Composition** | **phr** |
|---|---|
| PVC resin, IV 0.92, K-67 | 100 |
| Tin stabilizer | 2 |
| Calcium Stearate | 0.8 |
| Paraffin wax | 1.2 |
| Oxidized PE wax | 0.2 |
| Calcium Carbonate | 3.0 |
| Acrylic impact modifier | 6.0 |
| Processing aid | 1.0 |
| Titanium Dioxide | 9.0 |

### 3. Mixing color masterbatch and siding powder by extrusion

| **Composition** | **gram** |
|---|---|
| Siding powder | 2000 |
| Color masterbatch | 40 |

Melt temperature, torque and die pressure are extrusion parameters. Wax act as dispersant in color masterbatch should not be effect to these parameter. From the table 1, these parameters are not changed when W-1 added. This means that the processing is similar in extrusion parameters without color masterbatch.

From the table 1, powder flow is poor in sample without wax, but powder flow is better when dispersant added.

Tensile and strain are key parameters to indicate that PVC entanglement. When entanglement is strong, the PVC can elongate before rupture, this is the good point. From table 2, sample no. 5 (W1 added) show the highest in term of tensile and strain. So, our W1 has shown an excellent result for compatibility and entanglement.

## Claims

1. Composition comprising an oxidized polyethylene wax, wherein the composition has an acid value of 11 to 15 mgKOH/g, preferably 12 to 15 mgKOH/g, even more preferred 12 to 14 mgKOH/g according to ASTM D1386 with respect to the total weight of the oxidized polyethylene wax, a weight average molecular weight from 4,000 to 12,000 g/mol, preferably 4,000 to 9,000 g/mol, even more preferred 5,000 to 8,000 g/mol determined according to gel permeation chromatography; and a density from 0.92 to 0.99 g/cm³, preferably 0.93 to 0.97 g/cm³, even more preferred 0.93 to 0.95 g/cm³ according to ASTM D1505.

2. Composition according to claim 1, wherein the composition has a viscosity from 80 to 1,500 cP at 149°C, preferably 100 to 600 cP at 149°C, even more preferred 130 to 250 cP at 149°C according to ASTM D3236.

3. Composition according to claim 1 or 2, wherein the composition has a viscosity from 130 to 170 cP at 149°C.

4. Composition according to any of the preceding claims, wherein the composition has a density from 0.94 to 0.95 g/cm³.

5. Composition according to claim 1 or 2, wherein the composition comprises 70 to 85% by weight of an oxidized polyethylene wax having an acid value from 17 to 18 mgKOH/g and 15 to 30% by weight of a polyethylene homopolymer wax with respect to the total weight of the composition, respectively.

6. Composition according to claim 5, wherein the composition has a density from 0.93 to 0.94 g/cm³.

7. Composition according to claim 5 or 6, wherein the composition has a viscosity from 150 to 250 cP at 149°C.

8. Composition according to any of the claims 5 to 7, wherein the polyethylene homopolymer wax has a viscosity from 80 to 1,500 cP at 149°C, preferably 100 to 1,200 cP at 149°C, even more preferred 100 to 1,000 cP at 149°C.

9. Composition according to any of the claims 5 to 8, wherein the polyethylene homopolymer wax has a density from 0.91 to 0.96 g/cm³, preferably 0.91 to 0.95 g/cm³, even more preferred 0.91 to 0.93 g/cm³.

10. Composition according to any of the claims 5 to 9, wherein the polyethylene homopolymer way has a weight average molecular weight from 2,000 to 12,000 g/mol, preferably 2,000 to 10,000 g/mol, even more preferred 3,000 to 10,000 g/mol determined according to gel permeation chromatography.

11. Color masterbatch comprising the composition according to any of the preceding claims and at least one pigment.

12. Color masterbatch according to claim 11, wherein the pigment wherein the pigment is selected from the group consisting of organic pigments, inorganic pigments or a combination thereof, preferably is selected from the group consistin of phthalocyanines, ultramarines and mixtures thereof.

13. Product comprising a polymer and the color masterbatch according to claim 11 or 12.

14. Product according to claim 13, wherein the polymer is selected from the group consisting of polyvinylchloride, chlorinated polyvinyl chloride, polyethylene terephthalate, polybutylene terephthalate, acrylonitrile butadiene styrene, polyamide, polycarbonate, polyolefin and mixtures thereof.

15. Product according to claim 13 or 14, wherein the product is selected from a pipe, a window profile, a door profile, a siding or a window frame, a door frame, a sheet or a floor.

16. Use of the color masterbatch according to claim 11 or 12 in extrusion molding or injection molding.

17. Use of the composition according to any of the claims 1 to 10 as a dispersing agent.

## Patentansprüche

1. Zusammensetzung, umfassend ein oxidiertes Polyethylenwachs, wobei die Zusammensetzung eine Säurezahl von 11 bis 15 mgKOH/g, vorzugsweise 12 bis 15 mgKOH/g, noch bevorzugter 12 bis 14 mgKOH/g gemäß ASTM D1386 in Bezug auf das Gesamtgewicht des oxidierten Polyethylenwachses, ein gewichtsmittleres Molekulargewicht von 4.000 bis 12.000 g/mol, vorzugsweise 4.000 bis 9.000 g/mol, noch bevorzugter 5.000 bis 8.000 g/mol, bestimmt gemäß Gelpermeationschromatographie, und eine Dichte von 0,92 bis 0,99 g/cm³, vorzugsweise 0,93 bis 0,97 g/cm³, noch bevorzugter 0,93 bis 0,95 g/cm³ gemäß ASTM D1505 aufweist.

2. Zusammensetzung nach Anspruch 1, wobei die Zusammensetzung eine Viskosität von 80 bis 1.500 cP bei 149 °C, vorzugsweise 100 bis 600 cP bei 149 °C, noch bevorzugter 130 bis 250 cP bei 149 °C gemäß ASTM D3236 aufweist.

3. Zusammensetzung nach Anspruch 1 oder 2, wobei die Zusammensetzung eine Viskosität von 130 bis 170 cP bei 149 °C aufweist.

4. Zusammensetzung nach einem der vorhergehenden Ansprüche, wobei die Zusammensetzung eine Dichte von 0,94 bis 0,95 g/cm³ aufweist.

5. Zusammensetzung nach Anspruch 1 oder 2, wobei die Zusammensetzung 70 bis 85 Gew.-% eines oxidierten Polyethylenwachses mit einer Säurezahl von 17 bis 18 mgkoh/g bzw. 15 bis 30 Gew.-% eines Polyethylenhomopolymerwachses in Bezug auf das Gesamtgewicht der Zusammensetzung umfasst.

6. Zusammensetzung nach Anspruch 5, wobei die Zusammensetzung eine Dichte von 0,93 bis 0,94 g/cm³ aufweist.

7. Zusammensetzung nach Anspruch 5 oder 6, wobei die Zusammensetzung eine Viskosität von 150 bis 250 cP bei 149 °C aufweist.

8. Zusammensetzung nach einem der Ansprüche 5 bis 7, wobei das Polyethylenhomopolymerwachs eine Viskosität von 80 bis 1.500 cP bei 149 °C, vorzugsweise 100 bis 1.200 cP bei 149 °C, noch bevorzugter 100 bis 1.000 cP bei 149 °C aufweist.

9. Zusammensetzung nach einem der Ansprüche 5 bis 8, wobei das Polyethylenhomopolymerwachs eine Dichte von 0,91 bis 0,96 g/cm³, vorzugsweise 0,91 bis 0,95 g/cm³, noch bevorzugter 0,91 bis 0,93 g/cm³ aufweist.

10. Zusammensetzung nach einem der Ansprüche 5 bis 9, wobei das Polyethylenhomopolymerwachs ein gewichtsmittleres Molekulargewicht von 2.000 bis 12.000 g/mol, vorzugsweise 2.000 bis 10.000 g/mol, noch bevorzugter 3.000 bis 10.000 g/mol, bestimmt gemäß Gelpermeationschromatographie, aufweist.

11. Farb-Masterbatch, umfassend die Zusammensetzung nach einem der vorhergehenden Ansprüche und mindestens ein Pigment.

12. Farb-Masterbatch nach Anspruch 11, wobei das Pigment, wobei das Pigment ausgewählt ist aus der Gruppe bestehend aus organischen Pigmenten, anorganischen Pigmenten oder einer Kombination davon, vorzugsweise ausgewählt ist aus der Gruppe bestehend aus Phthalocyaninen, Ultramarinen und Mischungen davon.

13. Produkt, umfassend ein Polymer und den Farb-Masterbatch nach Anspruch 11 oder 12.

14. Produkt nach Anspruch 13, wobei das Polymer ausgewählt ist aus der Gruppe bestehend aus Polyvinylchlorid, chloriertem Polyvinylchlorid, Polyethylenterephthalat, Polybutylenterephthalat, Acrylnitril-Butadien-Styrol, Polyamid, Polycarbonat, Polyolefin und Mischungen davon.

15. Produkt nach Anspruch 13 oder 14, wobei das Produkt ausgewählt ist aus einem Rohr, einem Fensterprofil, einem Türprofil, einer Verkleidung oder einem Fensterrahmen, einem Türrahmen, einem Blech oder einem Boden.

16. Verwendung des Farb-Masterbatches nach Anspruch 11 oder 12 beim Extrusionsformen oder Spritzgießen.

17. Verwendung der Zusammensetzung nach einem der Ansprüche 1 bis 10 als Dispergiermittel.

## Revendications

1. Composition comprenant une cire de polyéthylène oxydée, la composition ayant une valeur d'acidité comprise entre 11 et 15 mgKOH/g, de préférence entre 12 et 15 mgKOH/g, plus préférablement entre 12 et 14 mgKOH/g selon ASTM D1386 pour le poids total de la cire de polyéthylène oxydée, une masse moléculaire moyenne en poids comprise entre 4 000 et 12 000 g/mol, de préférence entre 4 000 et 9 000 g/mol, plus préférablement entre 5 000 et 8 000 g/mol, déterminée selon la chromatographie par perméation de gel ; et une densité comprise entre 0,92 et 0,99 g/cm³, de préférence entre 0,93 et 0,97 g/cm³, plus préférablement entre 0,93 et 0,95 g/cm³ selon ASTM D1505.

2. Composition selon la revendication 1, la composition ayant une viscosité comprise entre 80 et 1 500 cP à 149°C, de préférence entre 100 et 600 cP à 149°C, plus préférablement entre 130 et 250 cP à 149°C selon ASTM D3236.

3. Composition selon la revendication 1 ou 2, la composition ayant une viscosité comprise entre 130 et 170 cP à 149°C.

4. Composition selon l'une quelconque des revendications précédentes, la composition ayant une densité comprise entre 0,94 et 0,95 g/cm³.

5. Composition selon la revendication 1 ou 2, la composition comprenant entre 70 et 85 % en poids d'une cire de polyéthylène oxydée ayant une valeur d'acidité comprise entre 17 et 18 mgKOH/g et entre 15 et 30 % en poids d'une cire homopolymère de polyéthylène pour le poids total de la composition, respectivement.

6. Composition selon la revendication 5, la composition ayant une densité comprise entre 0,93 et 0,94 g/cm³.

7. Composition selon la revendication 5 ou 6, la composition ayant une viscosité comprise entre 150 et 250 cP à 149°C.

8. Composition selon l'une quelconque des revendications 5 à 7, dans laquelle la cire homopolymère de polyéthylène a une viscosité comprise entre 80 et 1 500 cP à 149°C, de préférence entre 100 et 1 200 cP à 149°C, plus préférablement entre 100 et 1 000 cP à 149°C.

9. Composition selon l'une quelconque des revendications 5 à 8, dans laquelle la cire homopolymère de polyéthylène a une densité comprise entre 0,91 et 0,96 g/cm³, de préférence entre 0,91 et 0,95 g/cm³, plus préférablement entre 0,91 et 0,93 g/cm³.

10. Composition selon l'une quelconque des revendications 5 à 9, dans laquelle la cire homopolymère de polyéthylène a une masse moléculaire moyenne en poids comprise entre 2 000 et 12 000 g/mol, de préférence entre 2 000 et 10 000 g/mol, plus préférablement entre 3 000 et 10 000 g/mol, déterminée selon la chromatographie par perméation de gel.

11. Mélange maître de couleur comprenant la composition selon l'une quelconque des revendications précédentes et au moins un pigment.

12. Mélange maître de couleur selon la revendication 11, dans lequel le pigment dans lequel le pigment est sélectionné dans le groupe constitué de pigments inorganiques, pigments inorganiques ou une combination de ces derniers, de préférence est sélectionné dans le groupe constitué de phtalocyanines, ultramarines et des mélanges de ces dernières.

13. Produit comprenant un polymère et le mélange maître de couleur selon la revendication 11 ou 12.

14. Produit selon la revendication 13, dans lequel le polymère est sélectionné dans le groupe constitué de chlorure de polyvinyle, chlorure de polyvinyle chloré, téréphtalate de polyéthylène, téréphtalate de polybutylène, acrylonitrile butadiène styrène, polyamide, polycarbonate, polyoléfine et des mélanges de ces derniers.

15. Produit selon la revendication 13 ou 14, dans lequel le produit est sélectionné parmi un tuyau, un profilé de fenêtre, un profilé de porte, un revêtement ou un cadre de fenêtre, un cadre de porte, une feuille ou un plancher.

16. Utilisation du mélange maître de couleur selon la revendication 11 ou 12 en moulage par extrusion ou en moulage par injection.

17. Utilisation de la composition selon l'une quelconque des revendications 1 à 10 en tant qu'agent dispersant.
